# EUROPEAN PATENT APPLICATION

(11) **EP 3 878 663 A1**
(43) Date of publication of application: **15.09.2021**
(21) Application number: 21162335.0
(22) Date of filing: 12.03.2021
(51) Int. Cl.: B60B 21/00, F16K 17/38

(54) **WHEEL ASSEMBLY WITH EXTERIOR FUSE PLUG**

(30) Priority: 13.03.2020 US 202016818232
(71) Applicant: Goodrich Corporation, Charlotte, NC 28217-4578 (US)
(72) Inventor: VAN OSS, John D., Beavercreek, OH 45431 (US)
(74) Representative: Dehns

(57) **Abstract**

A wheel assembly may comprise a wheel (210) including a rim (215) defining a radially outer surface (213) and a radially inner surface (214). The wheel may comprise a radial protrusion (230) and an aperture (232). The radial protrusion may extend radially outward from the radial outer surface. The aperture may extend radially through the radial protrusion to the radially inner surface. A fuse plug (220) may be disposed in the aperture.

## Description

### FIELD

The present disclosure relates to wheels, and more specifically, to wheels having thermal fuse plugs disposed therein.

### BACKGROUND

Aircraft typically utilize fuse plugs on wheels to release pressure and/or reduce stress on the wheel when the wheel overheats during braking. Typical fuse plugs may extend radially inward of a rim of the wheel and reduce clearance with a heat shield. Reduced clearance with the heat shield may reduce an intended function of the fuse plug having additional heat shield design complexity (i.e., addition of a relief feature). Similarly, the relief feature in the heat shield may reduce thermal protection compromising the intended function of the wheel.

### SUMMARY

A wheel is disclosed herein. The wheel comprises: a rim defining a radially outer surface and a radially inner surface; a radial protrusion extending radially outward from the radially outer surface; and an aperture extending radially through the radial protrusion to the radially inner surface.

In various embodiments, the wheel may further comprise a first flange at a first axial end of the wheel and a second flange at a second axial end of the wheel, the radial protrusion disposed between the first flange and the second flange. The radial protrusion may be annular in shape. The aperture may be configured to receive a fuse plug. The wheel may further comprise a plurality of the aperture disposed circumferentially about the radial protrusion. Each aperture may be spaced circumferentially equal distance from an adjacent aperture in the plurality of the aperture.

A wheel assembly is disclosed herein. The wheel assembly comprises: a wheel including a rim defining a radially outer surface; a radial protrusion extending radially outward from the radially outer surface, the radial protrusion including an aperture disposed therethrough; and a fuse plug disposed in the aperture.

In various embodiments, the fuse plug includes a fuse plug body and a eutectic material, the fuse plug body including a bottom surface and a top surface, the eutectic material disposed within the fuse plug body. The top surface may be disposed radially outward from the radially outer surface of the wheel. The wheel assembly may further comprise a heat shield disposed radially inward from the wheel, the bottom surface disposed proximate to the heat shield. The fuse plug may further comprise a circumferential groove. The wheel assembly may further comprise an O-ring disposed in the circumferential groove, the O-ring configured to couple the fuse plug to the wheel. The radial protrusion may be disposed local to the fuse plug. The bottom surface of the fuse plug may be disposed radially outward from a radially inner surface of the rim.

An assembly is disclosed herein. The assembly comprises: a wheel having a rim, a first flange, a second flange, the first flange disposed at a first axial, the second flange disposed at a second axial end, the rim extending from the first flange to the second flange and defining a radially outer surface and a radially inner surface; a tire coupled to the wheel and disposed radially outward from the rim, the tire and the rim defining a tire cavity; a radial protrusion extending from the radially outer surface of the rim into the tire cavity, the radial protrusion including an aperture disposed therethrough; and a fuse plug disposed in the aperture.

The tire may comprise a bead width measured axially from the first flange, and the radial protrusion may be a greater axial distance from the first flange than the bead width. The radial protrusion may be annular in shape. The assembly may further comprise a plurality of the fuse plug. The plurality of the fuse plug may be disposed circumferentially about the radial protrusion. The fuse plug may be configured to release pressure from the tire cavity when a threshold temperature is reached

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a wheel assembly coupled to a brake assembly, in accordance with various embodiments;
FIG. 2 illustrates a portion of a wheel assembly with a fuse plug removed, in accordance with various embodiments; and
FIG. 3 illustrates a cross-sectional view of a wheel assembly, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the invention as defined by the claims. Thus, the detailed description herein is presented for purposes of illustration only and not of limitation.

Provided herein, according to various embodiments, is a wheel assembly. The wheel assembly comprises a wheel having a rim and a radial protrusion extending radially outward from the rim. An aperture may be disposed through the radial protrusion to a radially inner surface of the rim. A fuse plug may be disposed in the aperture. The fuse plug may be disposed radially outward from a radially inner surface of the rim or flush with the radially inner surface of the rim. In this regard, the fuse plug may be spaced apart from a heat shield disposed radially inward from the radially inner surface of the rim. In various embodiments, the wheel assembly may be configured to provide enhanced thermal protection proximate the fuse plug. In various embodiments, the wheel assembly may decrease a cost and/or complexity of a heat shield for the wheel assembly.

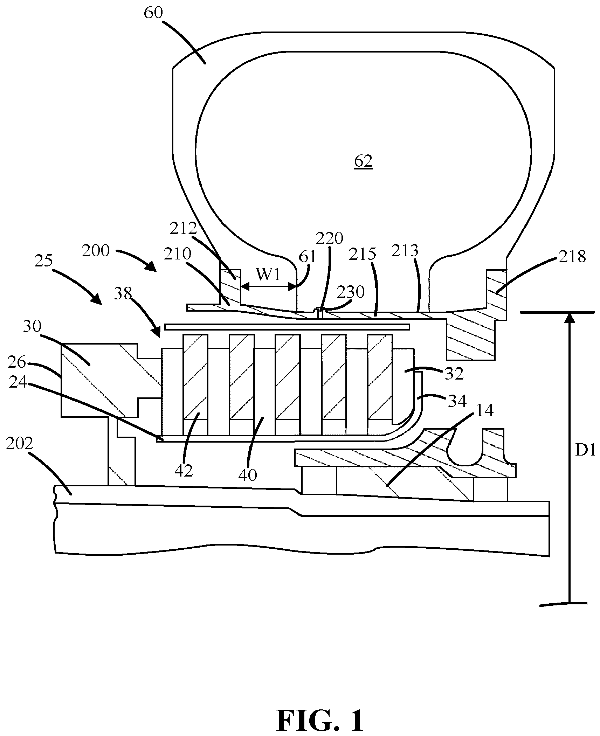

With reference to FIG. 1, a brake assembly 25 mounted to a wheel assembly 200 is illustrated, in accordance with various embodiments. Wheel assembly 200 includes axle 202 and a wheel 210 disposed on and configured to rotate about the axle 202 via one or more bearing assemblies 204. The brake assembly 25 is disposed radially inward of the wheel 210. A torque plate barrel 24 (sometimes referred to as a torque tube or barrel or a torque plate) is aligned concentrically with the axle 202. Wheel 210 is rotatable relative to the torque plate barrel 24. Rotation of wheel 210 is modulated by brake assembly 25.

Brake assembly 25 includes a plurality of brake disks 38. The plurality of brake disks 38 includes at least one non-rotatable friction disk (stator disk) 40, and at least one rotatable friction disk (rotor disk) 42. Each of the brake disks 38 includes an attachment structure. Brake disks 38 may include an end plate 32 and a pressure plate 30 located on opposing axial ends of the brake disk stack. End plate 32 is connected to, or is otherwise frictionally engaged with, a reaction plate 34 of torque plate barrel 24. End plate 32 is non-rotatable by virtue of its connection to torque plate barrel 24. Rotor disks 42 may be rotatable by virtue of their engagement with wheel assembly 200.

An actuating mechanism for the brake assembly 25 includes a plurality of piston assemblies 22 (one shown) circumferentially spaced around a piston housing 26. A tire 60 is disposed radially outward, and coupled to, wheel 210. The tire 60 and a radially outer surface of wheel 210 may define a cavity 62. The cavity may be filled with pressurized nitrogen, or the like. The wheel assembly 200 comprises a fuse plug 220 coupled to a rim 215 of wheel 210. Upon actuation, the plurality of piston assemblies affects a braking action by urging the pressure plate 30 and the plurality of stator disks 40 into frictional engagement with the plurality of rotor disks 42 and against the end plate 32. Through compression of the plurality of rotor disks 42 and the plurality of stator disks 40 between the pressure plate 30 and the end plate 32, the resulting frictional contact slows or stops or otherwise prevents rotation of the wheel 210. When a temperature proximate the fuse plug exceeds a threshold level, the fuse plug 220 is configured to release pressure in the cavity 62. In this regard, stresses experienced by wheel 210 may be reduced in response to the fuse plug 220 releasing.

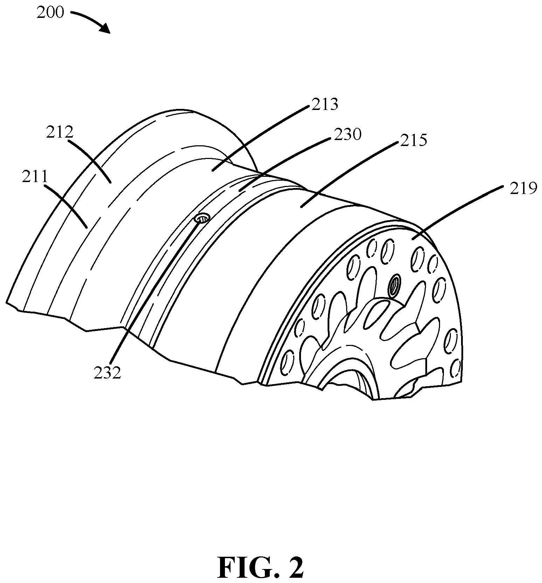

Referring now to FIG. 2, a perspective view of a portion of a wheel assembly with the fuse plug 220 removed for clarity is illustrated, in accordance with various embodiments. The wheel assembly comprises the wheel 210. The wheel 210 comprises a first axial end 211 disposed opposite a second axial end 219. First axial end comprises a first flange 212 extending radially outward from a radially outer surface 213 of wheel 210. Similarly, second axial end 219 may comprise a second flange 218 (as shown in FIG. 1) extending radially outward from radially outer surface 213 of the wheel 210. In various embodiments, the wheel assembly 200 may comprise only the first flange 212 and be coupled to an adjacent complimentary wheel assembly. Radially outer surface 213 may be defined by rim 215 of the wheel. The wheel 210 further comprises a radial protrusion 230 extending radially outward from the radially outer surface 213 of the wheel 210. In various embodiments, the radial protrusion 230 may be annular in shape. In various embodiments, the radial protrusion may only be at a local position configured to receive a fuse plug 220 (from FIG. 1).

In various embodiments, the wheel 210 may further comprise an aperture 232 disposed through the radial protrusion 230 of the wheel 210. In various embodiments, the wheel 210 may further comprise a plurality of the aperture 232 disposed circumferentially about the radial protrusion 230. For example, the wheel 210 may comprise three of the aperture 232 disposed equally apart circumferentially about the radial protrusion 230, or the wheel 210 may comprise four of the aperture 232 disposed equally apart circumferentially about the radial protrusion 230, or any number of aperture 232 may be disposed equally apart circumferentially about the radial protrusion 230. In various embodiments, the plurality of the aperture 232 may be disposed at different distances from adjacent apertures in the plurality of the aperture 232. In various embodiments, the aperture 232 may be configured to receive a fuse plug (e.g., fuse plug 220 from FIG. 1). In this regard, the aperture 232 may be sized to receive the fuse plug.

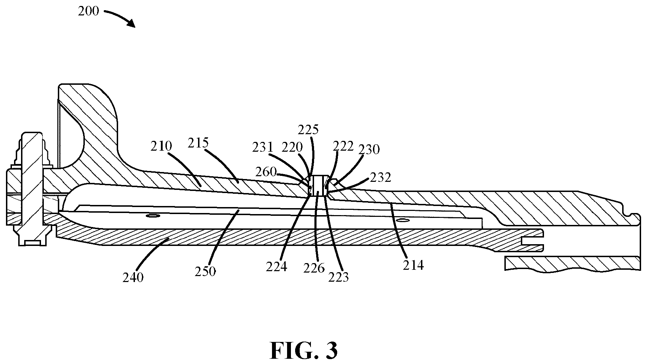

Referring now to Fig. 3, a cross-sectional view of a wheel assembly, in accordance with various embodiments. The wheel assembly 200 comprises the wheel 210, the fuse plug 220, a torque bar 240, and a heat shield 250. The fuse plug 220 is disposed in aperture 232. The fuse plug may be coupled to the wheel 210 by an O-ring 260. The O-ring 260 may be disposed in a circumferential groove 222 of the fuse plug 220 and compress against the circumferential groove 222 and a radially inner surface of the aperture 232 upon installation . The fuse plug 220 may further comprise a fuse plug body 224 and a low melting point material 226 (e.g., a eutectic material). The fuse plug body 224 may be annular in shape and form a ring, or the like. The low melting point material 226 may be disposed radially inward of the fuse plug body 224. In various embodiments, the low melting point material 226 is configured to melt at a threshold temperature. For example, when the wheel assembly 200 reaches the threshold temperature during operation, the low melting point material 226 melts and is ejected out the fuse plug 220 due to pressure in a tire cavity 62 (as shown in FIG. 1).

The torque bar 240 is disposed radially inward of the wheel 210. The torque bar 240 may be coupled to the wheel 210 by any method known in the art, such as a nut and fastener, a press fit, or the like. In various embodiments, the heat shield 250 is disposed radially between the torque bar 240 and the wheel 210. The heat shield 250 may be limited in size and shape due to limited radial space between the torque bar 240 and the wheel 210. The torque bar 240 engages rotating brake disks (e.g., rotor disks 42 from FIG. 1). In this regard, the torque bar 240 may be configured to provide brake torque to a brake assembly (e.g., brake assembly 25 from FIG. 1).

Typical fuse plugs may extend radially inward from a radially inner surface 214 of the rim 215. In this regard, typical fuse plugs may reduce clearance with the heat shield 250 upon assembly or during use of the wheel assembly 200. Due to reduced clearance with the heat shield 250, typical fuse plugs may not function correctly. In contrast, since the fuse plug 220 is disposed in aperture 232, which extends through radial protrusion 230, a clearance may be maintained upon assembly between the fuse plug 220 and heat shield 250. As such, the heat shield may comprise an increased thickness relative to typical wheel assemblies. In various embodiments, the wheel assembly 200 may further provide greater thermal protection proximate the fuse plug 220. In various embodiments, the wheel assembly 200 may further provide a decrease in cost and weight by removing local features on the heat shield 250 to address typical fuse plug issues. In various embodiments, a bottom axial surface 223 of the fuse plug 220 may be disposed radially outward from radially inner surface 214 of the rim 215. In various embodiments, the bottom axial surface 223 of the fuse plug 220 may be disposed flush with the radially inner surface 214 of the rim 215. In various embodiments, a top axial surface 225 of the fuse plug 220 may be disposed radially outward from radially outer surface 231 of the radial protrusion 230. In various embodiments, the top axial surface 225 of the fuse plug 220 may be disposed flush with the radially outer surface 231 of the radial protrusion 230.

In various embodiments, with brief reference back to FIG. 1, the tire 60 may comprise a radial tire. A "radial tire," as defined herein, is a particular tire design where cord plies of the tire 60 are arranged approximately 90 degrees to a radial direction of travel. The radial tire may comprise a decreased bead width W1 measured from flange 212 to an axial inner surface 61 of the tire 60 relative to typical tires and an increased bead inner diameter D1. For example, rim profiles of radial tires may have fewer restrictions relative to typical tires, and the decreased bead width W1 and increased bead diameter D1 of the tire 60 may provide space in cavity 62 for the radial protrusion 230 to extend radially outward from the radially outer surface 213 of the rim 215.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A wheel, comprising:
a rim (215) defining a radially outer surface (213) and a radially inner surface (214);
a radial protrusion (230) extending radially outward from the radially outer surface (213); and
an aperture (232) extending radially through the radial protrusion to the radially inner surface.

2. The wheel of claim 1, further comprising a first flange (212) at a first axial end (211) of the wheel and a second flange (218) at a second axial end (219) of the wheel, the radial protrusion disposed between the first flange and the second flange.

3. The wheel of claim 1 or 2, wherein the radial protrusion is annular in shape.

4. The wheel of claim 1, 2 or 3, wherein the aperture is configured to receive a fuse plug (220).

5. The wheel of any preceding claim, further comprising a plurality of the aperture disposed circumferentially about the radial protrusion.

6. The wheel of claim 4, wherein each aperture is spaced circumferentially equal distance from an adjacent aperture in the plurality of the aperture.

7. A wheel assembly, comprising:
a wheel (210) including a rim (215) defining a radially outer surface (213);
a radial protrusion (230) extending radially outward from the radially outer surface, the radial protrusion including an aperture (232) disposed therethrough; and
a fuse plug (220) disposed in the aperture.

8. The wheel assembly of claim 7, wherein the fuse plug includes a fuse plug body (224) and a eutectic material (226), the fuse plug body including a bottom surface (223) and a top surface (225), the eutectic material disposed within the fuse plug body, and optionally wherein the top surface is disposed radially outward from the radially outer surface of the wheel.

9. The wheel assembly of claim 8, further comprising a heat shield (250) disposed radially inward from the wheel, the bottom surface disposed proximate to the heat shield.

10. The wheel assembly of claim 8 or 9, wherein the fuse plug further comprises a circumferential groove, and optionally further comprising an O-ring (260) disposed in the circumferential groove, the O-ring configured to couple the fuse plug to the wheel.

11. The wheel assembly of claim 8, 9 or 10, wherein the radial protrusion is disposed local to the fuse plug.

12. The wheel assembly of any of claims 8 to 11, wherein the bottom surface of the fuse plug is disposed radially outward from a radially inner surface of the rim.

13. An assembly, comprising:
a wheel as claimed in claim 2 or any claim dependent thereon;
a tire (60) coupled to the wheel and disposed radially outward from the rim, the tire and the rim defining a tire cavity (62);
the radial protrusion extending from the radially outer surface of the rim into the tire cavity, the radial protrusion including the aperture disposed therethrough; and
one or more fuse plugs disposed in the aperture.

14. The assembly of claim 13, wherein the tire comprises a bead width measured axially from the first flange and bead inner diameter, and wherein the radial protrusion is a greater axial distance from the first flange than the bead width and diameter of the radial protrusion is less than the bead inner diameter.

15. The assembly of claim 13 or 14, wherein the fuse plug is configured to release pressure from the tire cavity when a threshold temperature is reached.
